# EUROPEAN PATENT APPLICATION

(11) **EP 2 025 955 A2**
(43) Date of publication of application: **18.02.2009**
(21) Application number: 08161629.4
(22) Date of filing: 01.08.2008
(51) Int. Cl.: F16B 35/04

(54) **Threaded bolt and method for its production**

(30) Priority: 03.08.2007 DE 102007036733
(71) Applicant: Newfrey LLC, Newark, Delaware 19711 (US)
(72) Inventor: Geist, Joachim, 35325 Mücke (DE); Schneider, Joachim, 35630, Ehringshausen (DE); Werner, Wolfgang, 72766, Reutlingen (DE)
(74) Representative: Haar, Lucas Heinz Jörn

(57) **Abstract**

A threaded bolt (1) having a shank (2) of basic cylindrical form and with a root end (3) and a head end (4) is provided with a spiral-shaped external thread (11), which has at least one principal flight (12) and in the vicinity of the root end (3) has at least one lead-in flight (13), adjoined by the principal flight (12), where the lead-in flight (13) has a lead-in surface which differs from the principal flight (12) and is formed in order to come into crossing-free engagement with flights of a complementary internal thread of an element. The lead-in flight (13) and the principal flight (12) are interrupted by at least one groove (15), which extends in the longitudinal direction of the shank (2) in order to form a free space for the accommodation of lacquer residues. The flights (12, 13) and the grooves (15) are primary shaped by rolling.

## Description

The invention relates to a threaded bolt having a shank of basic cylindrical form, which is provided with a spiral-shaped external thread that has at least one principal flight and one lead-in flight with a lead-in surface.

A threaded bolt of the kind indicated is known from EP 0,840,859. The known design of the threaded bolt is intended to prevent thread damage when the bolt is screwed with its external thread into a threaded hole with matching internal thread. Damage of the thread may occur in threaded elements without lead-in flight when the central axes of a bolt and a nut are misaligned in such a way that their threads are displaced with respect to each other by at least one-half pitch when the threads seek to engage in each other upon being screwed together. Then, if the two parts are turned against each other, this may lead to jamming and damage of the thread, where the flights of external and internal thread cross over each other. The formation of one or more lead-in flights ensures correct threading of the flights of internal and external threads, even in the case of unfavourable alignment, and prevents damage of the thread when the bolt is screwed in.

It is in addition disclosed in DE 10 2005 017,379 A1 that threaded bolts may be provided with grooves extending in the longitudinal direction, which interrupt the flights of the thread and form free spaces for the accommodation of lacquer, lacquer residues or dirt. Such a design is advantageous when the nut or bolt thread has been provided with a coat of lacquer before being screwed together. In the case of lacquering, the grooves remove lacquer from the flights and when the bolt is screwed into a threaded hole, detached particles of lacquer can be deposited in the grooves, so that they are not caught in between the flights and thereby hinder screwing of the parts into each other.

The object of the invention is to make available a threaded bolt of the kind mentioned at the beginning, which can be screwed in without the risk of thread damage, does not tend to jam in the case of a lacquered surface and can be produced especially inexpensively.

To accomplish this object, according to the invention there is provided a threaded bolt having a shank of basic cylindrical form, which has a root end and a head end and which is provided with a spiral-shaped external thread that has at least one principal flight and in the vicinity of the root end has at least one lead-in flight which is adjoined by the principal flight, where the lead-in flight has a lead-in surface that differs from the principal flight, has a smaller outside diameter than the latter and is formed in order to come into crossing-free engagement with flights of a complementary internal thread of an element, and where only the principal flight or the lead-in flight and the principal flight are interrupted by at least one groove which extends in the longitudinal direction of the shank, in order to form a free space for the accommodation of lacquer residues. Here the flights and the grooves are primary shaped by rolling.

Surprisingly, it has been found that the formation of lead-in flights and of grooves interrupting them can be matched to each other so that threaded bolts can be procured which ensure crossing-free engagement of the flights when the bolts are screwed into a threaded hole and thus reliably avoid damage of the thread. This was surprising to a person skilled in the art because, owing to interruption of the flights at the grooves, the possibility of defective engagement of the flights in case of incorrect alignment of the threaded bolt is substantially greater than in the case of threaded bolts without grooves. In unfavourable cases, for example with small diameters or a large number of grooves, according to one proposal of the invention, it may be provided that the groove or grooves interrupt only the principal flight, so that formation and action of the lead-in flight is not adversely affected by a groove.

According to another proposal of the invention, a plurality of grooves extending in the longitudinal direction of the shank preferably are provided at a like distance apart from each other, where each groove preferably runs along a spiral line, the angle of inclination of which at the outer periphery of the external thread amounts to about 70° to 85°, in particular 80°. The spiral-shaped course of the grooves ensures continuous rolling of the threaded bolt in the rolling process.

The depth of the grooves may be substantially equal to the depth of the thread, and when the diameter of the bolt is sufficiently great, the depth of the grooves may alternatively be greater than the depth of the thread.

A threaded bolt usually has a plurality of principal flights and also a plurality of lead-in flights, the lead-in flights having a smaller outside diameter than the principal flights. For reliable introduction of the threaded bolt into a threaded hole and avoidance of thread damage, it has in addition been found to be advantageous when the outside diameter of the lead-in flights increases over-proportionately in the direction of the principal flights, i.e., the change in diameter increases from lead-in flight to lead-in flight.

The lead-in flights may have a surface arched convex in profile or a lead-in surface limited laterally by thread flank sections and flat in profile. Preferably, lead-in flights of both embodiments are combined with each other, where the lead-in surface arched convex in profile has a smaller outside diameter than the lead-in surface flat in profile.

In order to limit the degree of misalignment when a threaded bolt according to the invention is screwed in, according to an additional proposal of the invention it is provided that, between the root end and the lead-in flight adjacent thereto, there is provided a threadless bolt section, the outside diameter of which corresponds substantially to the core diameter of the thread.

For producing the threaded bolt, the present invention provides a method in which a cylindrical bolt blank of metal is formed with a root end and a head end, a section of the bolt blank adjoining the root end is reduced in diameter up to a region designed for the formation of a lead-in flight and then, in a thread rolling machine, in one pass by means of flat jaws, in a first rolling phase principal flights and lead-in flights are partially and in a second rolling phase are fully primary shaped and, in addition, in the second rolling phase grooves are rolled into the surface of the bolt blank.

The method according to the invention has the advantage that the final form of the threaded bolt can be produced from a preformed blank in a single, continuous rolling process which consists of two different rolling phases. The method is therefore especially rapid and inexpensive to perform. It has further been found that sufficiently precise forming of the lead-in flights is obtained with this method, so that crossing-free engagement of the flights is reliably ensured when the bolt is screwed in.

According to an additional proposal of the invention, two unlike flat jaws, namely a first flat jaw with a rolling profile for formation of principal flights and lead-in flights, and a second flat jaw, which has an initial section with a rolling profile for partial formation of principal flights and lead-in flights, and an end section with ribs for the formation of grooves, where profile-free jaw sections are provided between the ribs, may be used for rolling the threaded bolts. This embodiment of the method has the advantage that the work pieces roll off the flat jaws trouble-free and the dimensional accuracy of the formed threaded bolt is great.

The invention is explained in detail below by an exemplary embodiment that is shown in the drawing, wherein
- Figure 1: shows a view of a threaded bolt according to the invention,
- Figure 2: an enlarged longitudinal section of a section comprising the root end of a threaded bolt according to the invention,
- Figure 3: a schematic representation of the method for rolling a threaded bolt according to the invention,
- Figure 4: a schematic representation of the flat jaw for the formation of grooves in the rolling of a threaded bolt according to the invention, and
- Figure 5: a view of an additional threaded bolt according to the invention.

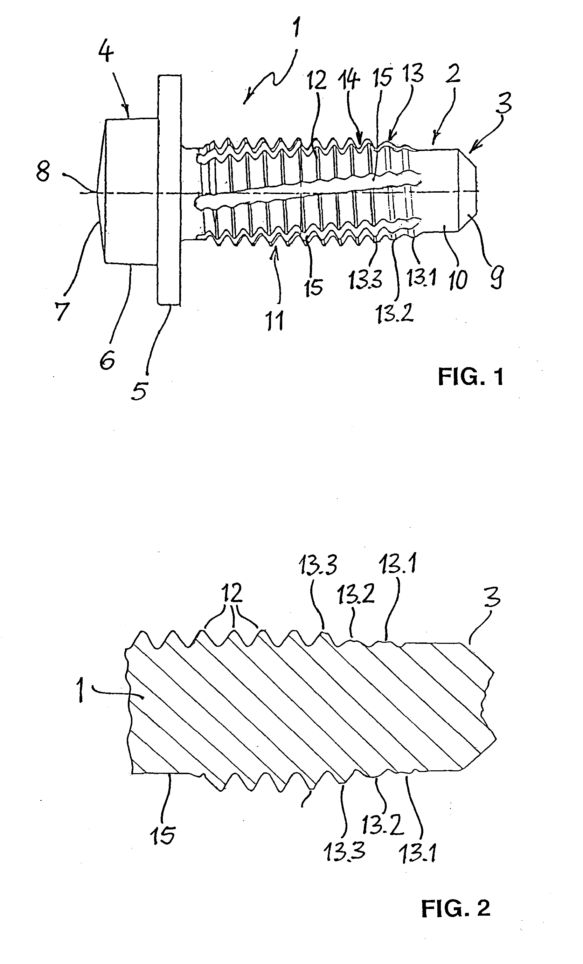

The threaded bolt 1 shown in Figure 1 has a shank 2 of basic cylindrical form with a root end 3 and a head end 4. Formed on the head end 4 is a flange 5, which on its side opposite the shank 2 bears a weld-on section 6 with a tapered face 7 for the formation of an ignition tip 8. At the root end 3, the shank is provided with a tapered bevel 9 and an adjoining cylindrical section 10.

Between the section 10 and the flange 5, the shank 2 has a metric external thread 11 with principal flights 12 and lead-in flights 13. The lead-in flights 13 are adjacent to the section 10. They are converted at approximately 14 into the adjoining principal flights 12. The principal flights 12 correspond in their design to the standard for metric thread with a pitch of 60°.

The lead-in flights 13 differ in form from the principal flights 12. The first lead-in flight 13.1 has the smallest outside diameter and a lead-in surface with convexly arched profile. The following lead-in flight 13.2 has a somewhat greater outside diameter. The profile of its lead-in surface is likewise arched convexly outward, where the curvature may be somewhat greater. The lead-in flight 13.2 is converted into a lead-in flight 13.3, which has a still greater outside diameter, but the outside diameter of which is still distinctly smaller than the outside diameter of the principal flights 12. The lead-in flight 13.3 already has pitch sections between which is found a lead-in surface flat in profile.

In the region of the external thread 11, the shank 2 in addition has a plurality of grooves 15, which extend in the longitudinal direction and run along a spiral line about the longitudinal axis of the shank 2. The angle of inclination of the spiral line of the grooves 15, that is, the angle that upon unwinding forms the spiral line of a peripheral line, amounts to about 80°, but may alternatively be smaller or greater. The depth of the grooves 15 corresponds substantially to the depth of the external thread 11. The principal flights 12 and the lead-in flights 13 are therefore interrupted by the grooves 15 and subdivided into individual flight sections. The grooves 15 have the task, when the threaded bolt 1 is screwed into a threaded hole, of accommodating lacquer residues that become detached from the previously lacquered surfaces of the threaded bolt and/or the threaded hole.

Figure 2 shows a cross section through the front end of the bolt 1. Here, the unlike form of the lead-in flights 13.1, 13.2 and 13.3 is clearly visible, where the lead-in surface of the first lead-in flight 13.1 has not been fully formed out in rolling and therefore does not have the provided convex arching. However, this is not disadvantageous for screwing in, since the thereby still flatter lead-in flight 13.1 is able to promote rather than hinder automatic alignment of the bolt 1. The first principal flight 12.1, in contrast to the following principal flights 12, is likewise not fully formed out in its tip region. Such small deviations from the form sought may result, however, due to slight dimensional deviations and inhomogeneities of the blank in subsequent deformation of the threaded bolt.

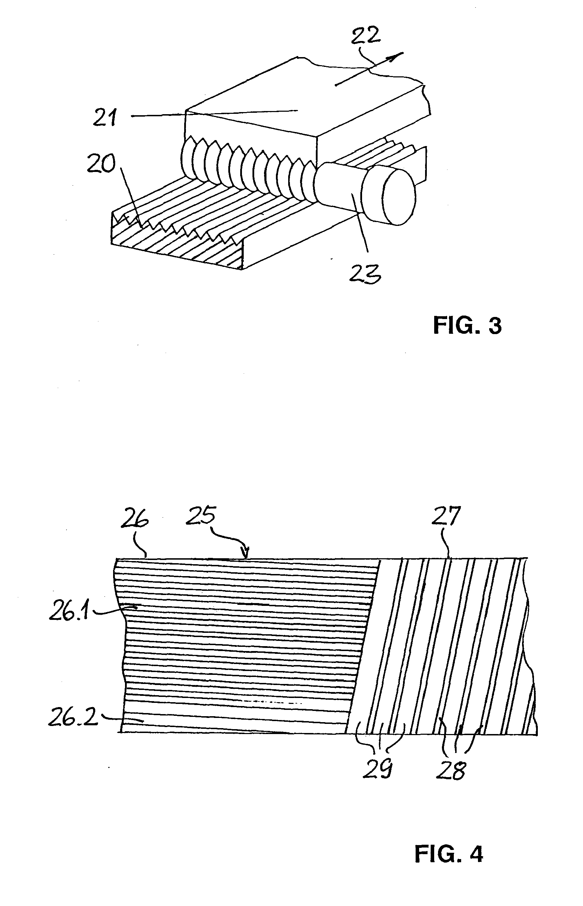

The principle of the rolling method with flat jaws used according to the invention is illustrated in Figure 3. A lower flat jaw 20 is arranged stationary and has on its upper side a development of the thread profile. Over the jaw 20 is seated movable in the longitudinal direction an upper flat jaw 21, which on its underside has a development of the thread profile. The movable seating of the upper jaw 21 is designed so that in the starting position of the jaw 21 a cylindrical blank can be inserted between the jaws. With continued movement of the jaw 21 in the direction of the arrow 22, the distance between the jaws 20, 21 is reduced, so that the thread profile of the jaws penetrates into the surface of the blank and while the blank rolls on the jaws, the thread is formed out more and more strongly up to its final definition. The drawing shows the end of the thread rolling process with the blank formed into the threaded bolt 23.

Figure 4 illustrates the construction of a flat jaw 25, which is designed for producing a threaded bolt according to the invention. The flat jaw 25 has an initial section 26 with a thread rolling profile, where the thread rolling profile has a region 26.1 for the formation of principal flights and a region 26.2 for the formation of lead-in flights. The initial section 26 is adjoined by an end section 27, which is provided with ribs 28 for the formation of grooves. Between the ribs 28 are found deeper, profile-free sections 29, into which the formed-out sections of the flights, which are found between the grooves, can penetrate. The jaw 25 is used together with a second flat jaw, which on its entire length has a thread rolling profile suitable for the formation of principal flights and lead-in flights.

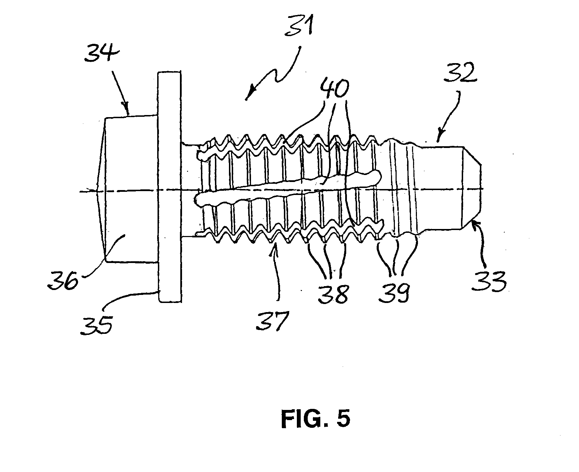

Figure 5 shows a threaded bolt 31, which is like the threaded bolt 1 up to the formation of grooves. The threaded bolt 31 has a shank 32 with a root end 33 and a head end 34, which is provided with a flange 35 and a weld-on section 36. The shank bears a metric external thread 37 with principal flights 38 and, between the flights 38 and the root end 33, lead-in flights 39.

In the case of the threaded bolt 31, only the principal flights 38 are interrupted by a plurality of grooves 40. The grooves 40 extend along a spiral line with like angle of inclination and have a like distance apart from each other. The grooves 40 end at the lead-in flights 39, so that the lead-in flights 39 are fully formed. This has the advantage that, in case of unfavourable conditions of thread-to-shank diameter and in case of an unfavourable number of grooves referred to shank diameter, a more precise configuration and better action of the lead-in flights 39 can be obtained. Since the lead-in flights 39 are not fully formed flights, the absence of grooves 40 in this region is not disadvantageous.

## Claims

1. Threaded bolt (1) having a shank (2) of basic cylindrical form, which has a root end (3) and a head end (4) and which is provided with a spiral-shaped external thread (11) , which has at least one principal flight (12) and in the vicinity of the root end (3) has at least one lead-in flight (13), which is adjoined by the principal flight (12), where the lead-in flight (13) has a lead-in surface that differs from the principal flight (12), has a smaller outside diameter than the latter and is formed in order to come into crossing-free engagement with flights of a complementary internal thread of an element, **characterized in that** only the principal flight (12) or the lead-in flight (13) and the principal flight (12) are interrupted by at least one groove (15), which extends in the longitudinal direction of the shank (2), in order to form a free space for the accommodation of lacquer or lacquer residues and that the flights (12, 13) and the grooves (15) are primary shaped by rolling.

2. Threaded bolt (1) according to Claim 1, **characterized in that** a plurality of grooves (15) extending in the longitudinal direction of the shank (2) are provided at a like distance apart from each other.

3. Threaded bolt (1) according to Claim 2, **characterized in that** only the principal flight (12) is interrupted by at least one first groove (40) and the lead-in flight (13) and the principal flight (12) are interrupted by at least one second groove (15).

4. Threaded bolt (1) according to any of the preceding claims, **characterized in that** each groove (15) runs along a spiral line, where the angle of inclination of the spiral line at the outer periphery of the external thread (11) amounts to 70° to 85°, in particular 80°.

5. Threaded bolt (1) according to any of the preceding claims, **characterized in that** the depth of the groove or grooves (15) is substantially equal to the depth of the thread (11).

6. Threaded bolt (1) according to any of the preceding claims, **characterized in that** a plurality of principal flights (12) and a plurality of lead-in flights (13) are provided, the lead-in flights (13) having a smaller outside diameter than the principal flights (12), and **in that** the outside diameter of the lead-in flights (13) increases over-proportionately in the direction of the principal flights (12).

7. Threaded bolt (1) according to any of the preceding claims, **characterized in that** at least one first lead-in flight (13.2) has a lead-in surface arched convex in profile and at least one second lead-in flight (13.3) has a lead-in surface limited by pitch sections and flat in profile.

8. Threaded bolt (1) according to any of the preceding claims, **characterized in that** a threadless bolt section (10) is provided between the root end (3) and the lead-in flight (13.1) adjacent to the latter.

9. Threaded bolt (1) according to any of the preceding claims, **characterized in that** a weld flange (5) or a tool-engagement flange is formed on the head end (4).

10. Method for producing a threaded bolt (1) according to any of the preceding claims, **characterized in that** a cylindrical bolt blank of metal is formed with a root end (3) and a head end (4), **in that** a section of the bolt blank adjoining the root end (3) is reduced in diameter up to a region designed for the formation of a lead-in flight (13), and **in that**, in a thread rolling machine, in one pass by means of flat jaws (20, 21), in a first rolling phase principal flights (12) and lead-in flights (13) are partially and in a second rolling phase are fully formed and, in addition, in the second rolling phase grooves (15) are rolled into the surface of the bolt blank.

11. Method according to Claim 10, **characterized in that** rolling is effected with two unlike flat jaws, a first flat jaw with a rolling profile for the formation of principal flights and lead-in flights and a second flat jaw (25), which has an initial section (26) with a thread rolling profile section (26.1, 26.2) for the formation of principal flights and lead-in flights and an end section (27) with ribs (28) for the formation of grooves (15), where profile-free sections (29) are provided between the ribs.
